# EUROPEAN PATENT SPECIFICATION

(11) **EP 2 139 728 B1**
(45) Date of publication and mention of the grant of the patent: **30.05.2012**
(21) Application number: 08719762.0
(22) Date of filing: 19.03.2008
(51) Int. Cl.: B60R 22/00, B60R 22/14

(54) **ADAPTIVE HEAD AND NECK RESTRAINT SYSTEM FOR A PERSON IN A VEHICLE**
ADAPTIVES KOPF- UND NACKENSTÜTZSYSTEM FÜR EINE PERSON IN EINEM FAHRZEUG
SYSTÈME ADAPTATIF DE RETENUE DE LA TÊTE ET DU COU POUR UNE PERSONNE DANS UN VÉHICULE

(30) Priority: 20.03.2007 ZA 200702327
(43) Date of publication of application: 06.01.2010
(73) Proprietor: Xceed Holdings Close Corporation, Durbanville 7550 (ZA)
(72) Inventor: NELSON, Grant Leigh, Cape Town (ZA)
(74) Representative: Jappy, John William Graham
(86) International application number: PCT/IB2008/051037
(87) International publication number: WO 2008/114215

(56) References cited:
- EP-A- 1 462 363
- WO-A-99/38401
- US-B1- 6 751 809
- US-B1- 6 810 535

## Description

### BACKGROUND OF THE INVENTION

THIS invention relates to a head and neck restraint system for an occupant of a vehicle.

The occupant of a vehicle such as a high performance motor racing vehicle, a high speed power boat or the like is subjected to significant accelerations, particularly in the event of a crash. Occupants of such vehicles generally wear a crash helmet and a four- or six-point harness securing them in position in a seat.

Various systems have been proposed for enhancing the protection offered to the occupant of such a vehicle by tethering the occupant's helmet to a support structure of some kind. For example, it has been proposed to provide a yoke which rests on the upper torso of the occupant, to which the helmet is tethered. The purpose of such devices is to limit the movement of the helmet and hence the head and neck of the occupant relative to the occupant's torso when substantial accelerations are experienced, particularly in a crash.

EP 1 462 363 discloses a restraining system comprising a yoke with tethers that attach to a helmet to restrict movement of the helmet. Means is disclosed to resist lateral sliding of harness straps of the yoke.

US 6 751 809 and US 6 810 535 each discloses tethers for restricting movement of the helmet. One of the tethers (called a "strap" in US 6 810 535) has one end held in position by a transverse bar behind the shoulders and below harness straps. The tether is elongated to vary the restriction it places on helmet movement, according to the force exerted on the helmet. In US 6 751 809 the tether is guided by a yoke.

WO 99/38401, which comprises the features mentioned in the preamble of claim 1, discloses a yoke with a collar that is held in position by harness straps and tethers extending horizontally between the collar and a helmet to restrict forward and lateral movement of the helmet. The tethers can slide relative to the collar.

It is an object of the invention to provide alternative head and neck restraint apparatus.

### SUMMARY OF THE INVENTION

According to the invention there is provided head and neck restraint apparatus according to claim 1.

The yoke is preferably generally U-shaped, with a base and upwardly extending limbs, the base of the U corresponding to the frontal portion of the yoke and the upper ends of the limbs corresponding to the helmet engaging portion thereof.

A pair of first guide means are preferably mounted on the frontal portion of the yoke, each guide means being arranged to receive a respective strap of a safety harness worn by the occupant.

Preferably, each first guide means is shaped to engage a buckle or other formation on the strap so that longitudinal movement of the strap relative to the first guide means, at least in one direction, is prevented.

Preferably each first guide means is mounted slidably relative to the yoke so that an acceleration causing movement of the occupant and the yoke relative to the harness causes sliding displacement of the first guide means relative to the yoke.

The tensioning members are preferably flexible cords fixed to the first guide means at one end thereof and connectable to respective fixing points on the helmet in use.

Preferably, the yoke defines a guide for each tensioning member to ensure correct orientation thereof in use.

For example, the yoke may define conduits extending between a lower edge of the frontal portion of the yoke, adjacent to the first guide means, and respective inner surfaces of the helmet engaging portion of the yoke.

Preferably, the apparatus includes a plurality of second guide means mounted on the intermediate portion of the yoke and arranged to engage respective harness members passing over the shoulders of the occupant in use, the second guide means being responsive to lateral movement of the harness members due to movement of the occupant causing displacement of the harness relative to the yoke, with a plurality of tension members each connectable between a second guide means and the helmet.

Each second guide means is preferably mounted slidably relative to the yoke so that an acceleration causing lateral movement of the occupant and the yoke relative to the harness causes sliding displacement of the second guide means relative to the yoke.

The head and neck restraint apparatus is thus operable to constrain movement of the occupant's helmet, and thus the occupant's head and neck, relative to the occupant's torso as a result of movement of the occupant in both fore-and-aft and lateral directions.

### BRIEF DESCRIPTION OF THE DRAWINGS

- **Figure 1**: is a pictorial view of head and neck restraint apparatus according to the invention;
- **Figure 2**: is a pictorial view similar to that of Figure 1, showing the range of movement of first and second guide means of the apparatus;
- **Figure 3**: is a pictorial view similar to those of Figures 1 and 2, showing the straps of a harness engaged with the apparatus;
- **Figure 4**: is a similar illustration to that of Figure 3, additionally showing a helmet of a user of the apparatus in position adjacent to the apparatus;

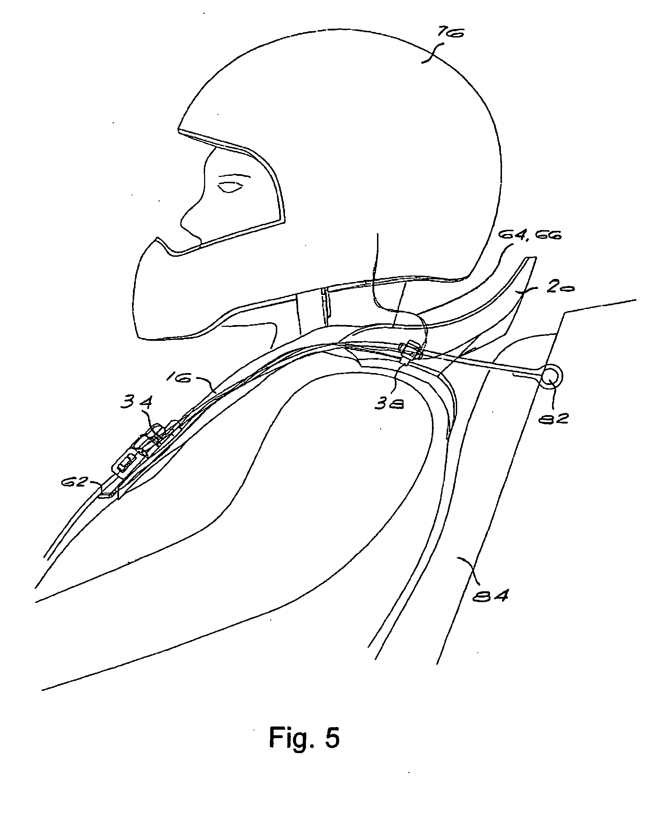

- **Figures 5 & 6**: are side views showing the apparatus in use, before and after an impact;
- **Figure 7**: is a front view of a user of the apparatus, corresponding to Figure 5;
- **Figure 8**: is a similar view to that of Figure 7, showing the effect of a lateral impact on the user; and
- **Figure 9**: is a top view of the user, corresponding to Figure 6.

### DESCRIPTION OF EMBODIMENTS

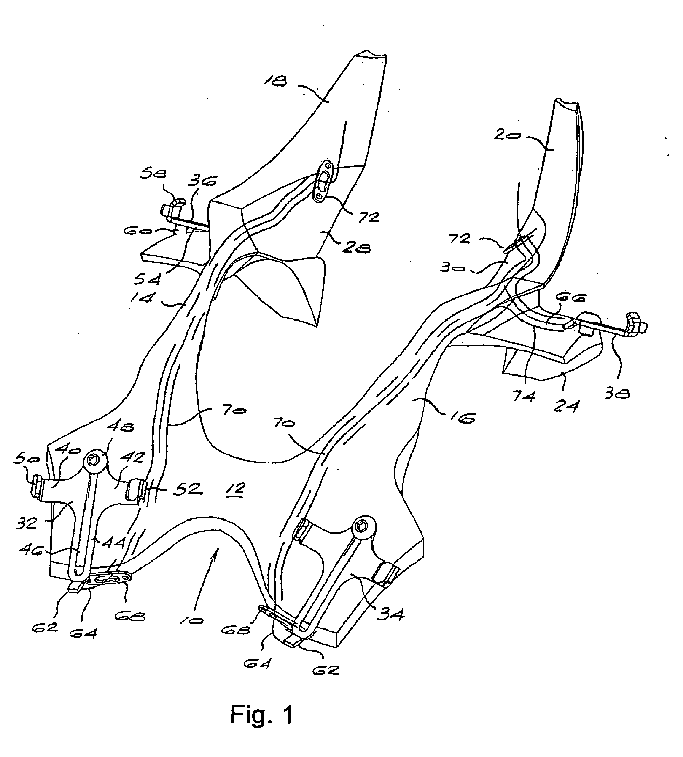

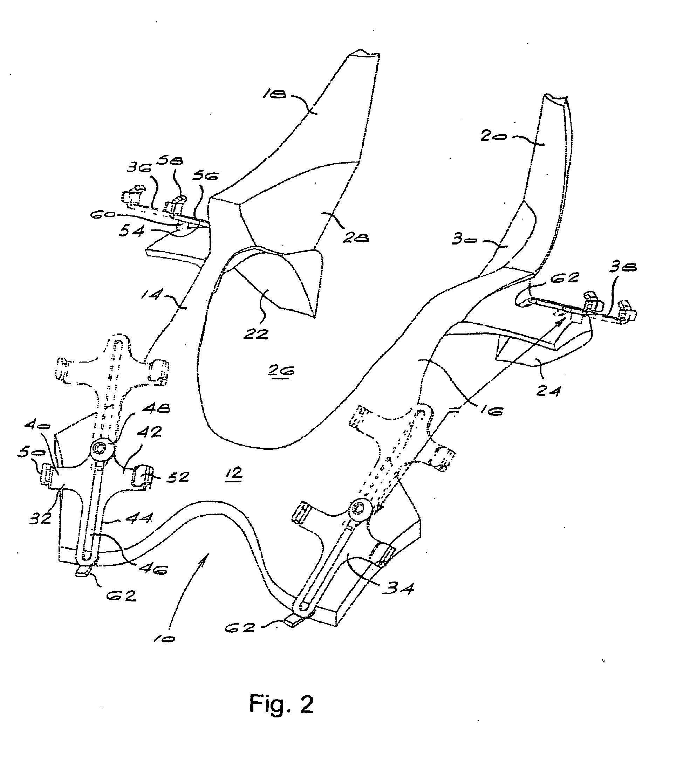

Figures 1 and 2 show an embodiment of head and neck restraint apparatus according to the present invention. The apparatus is intended for use by occupants of vehicles, boats, aircraft and other craft or vessels that may be subject to rapid accelerations or impact in use. For purposes of this specification, the word "vehicle" is intended to refer to any and all vehicles, crafts, conveyances or the like.

The apparatus comprises a yoke 10 which is generally U-shaped and which has a frontal portion 12 corresponding to the base of the U, an intermediate portion comprising a pair of limbs 14 and 16 which generally correspond to the limbs of the U, and a pair of upper, helmet engaging portions 18 and 20 which correspond to the upper ends of the U.

The yoke 10 is preferably rigid and can be molded from a suitably strong plastics material, glass fibre and resin, or a light weight composite material comprising carbon fibre or Kevlar (trade mark), for example. It will be appreciated that the materials indicated are merely exemplary and that other suitable materials could also be used.

The yoke is shaped to rest of the shoulders of a user of the apparatus, with the frontal portion of the yoke lying over the upper torso or chest area of the user. The limbs 14 and 16 include curved shoulder engaging formations 22 and 24 which extend over and behind the shoulders of the user in use, locating the yoke firmly on the upper torso of the user. When so located, the yoke defines an opening 26 below and around the neck and head of the user. The opening 26 is sized to permit a degree of unimpeded movement of the user's neck relative to the yoke, but the width is less than the width of a conventional crash helmet worn by the user, preventing the yoke from being lifted upwardly off the user while the user is wearing the helmet.

The upstanding helmet engaging members 18 and 20 have curved inner surfaces 28 and 30 shaped complementally to the curvature of a typical crash helmet, allowing them to extend close to the crash helmet in use without impeding its movement unduly as the user moves his or her head. Thus, the user can rotate his or her head from side to side while wearing the yoke 10. The helmet restraining members 18 and 20 limit rearward movement of the helmet relative to the yoke, but permit free forward movement of the helmet.

Mounted on the body of the yoke are two pairs of guides which engage the straps of a four- or six-point harness worn by the user. A first pair of guides 32 and 34 are mounted on the frontal portion of the yoke, on its upper surface and towards opposed side edges thereof. A second pair of guides 36 and 38 are mounted on respective upper surfaces of the shoulder engaging portions 22 and 24 of the yoke.

The guides 32 and 34 each comprise a generally cruciform bracket having a pair of arms 40 and 42 extending on either side of an elongate central member 44. Outer ends 50 and 52 of the arms 40 and 42 are curved inwardly, enabling them to retain a harness strap between them in use. An elongate slot 46 extends substantially the entire length of the central member 44 and is sized to fit about the shaft of a bolt 48 fixed to the yoke so that the entire guide can slide longitudinally relative to the bolt, between the positions shown in solid and dotted outlines in Figure 2.

The guides 36 and 38 are simpler in design, each comprising an elongate member 54 having a longitudinally extending slot 56 therein. A bolt 60 retains each guide 36, 38 slidably on the yoke, allowing it to move between the positions shown in solid and dotted outline in Figure 2. The elongate member 54 has an inwardly curved outer end 58 at an outer end of the member 54, for retaining a harness strap in the guide.

At the lowermost ends of the guides 32 and 34, and at the innermost ends of the guides 36 and 38, attachment points 62 are provided to which are fixed respective flexible cords 64 and 66. The attachment points each define one or more holes or slots through which the cords 64 and 66 are threaded and looped to lock them in a desired position on the guides. For example, in the case of a user with a relatively long neck, the cords will be adjusted to be longer than for a user with a shorter neck.

The cords 64 attached to the guides 32 and 34 pass through respective openings 68 in the front edge of the frontal portion of the yoke 10 and through conduits or passages 70 defined in the body of the yoke, exiting at respective openings 72 in the helmet engaging surfaces 28 and 30. The cords 66 pass through respective conduits 74 and out of the same apertures 72. The exit points for the cords defined by the apertures 72 are generally at least 115mm below and 125mm behind the centre of gravity of the head of an average user of the apparatus seated in an upright neutral position.

The cords 64 and 66 serve as tensioning members or tethers which are fixed to attachment points on the rear side surfaces of the user's helmet in use. The cords will normally be attached to an FIA certified helmet mount or existing helmet strap which is located below and generally behind the centre of gravity of the user's head. The cords will typically be a Kevlar or Vectran (trade marks) fibrous cord, or comprise a similar suitable material, which is flexible but non-extendable under tension.

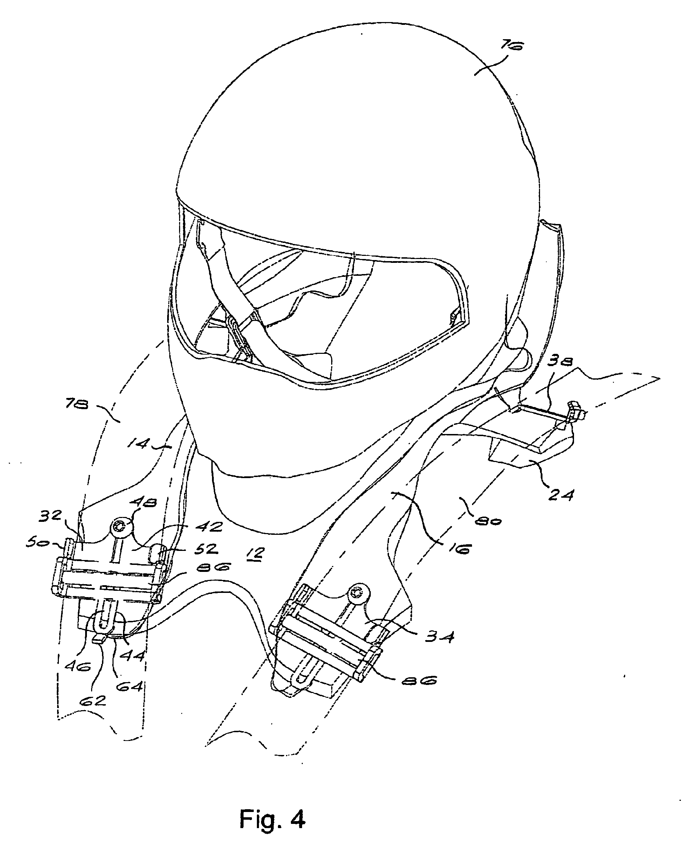

When a user is wearing the yoke and a helmet, as shown in Figure 4, the cords 64 and 66 are attached to a helmet 76 as shown, with just sufficient play to allow normal movement of the user's head without pulling the cords tight.

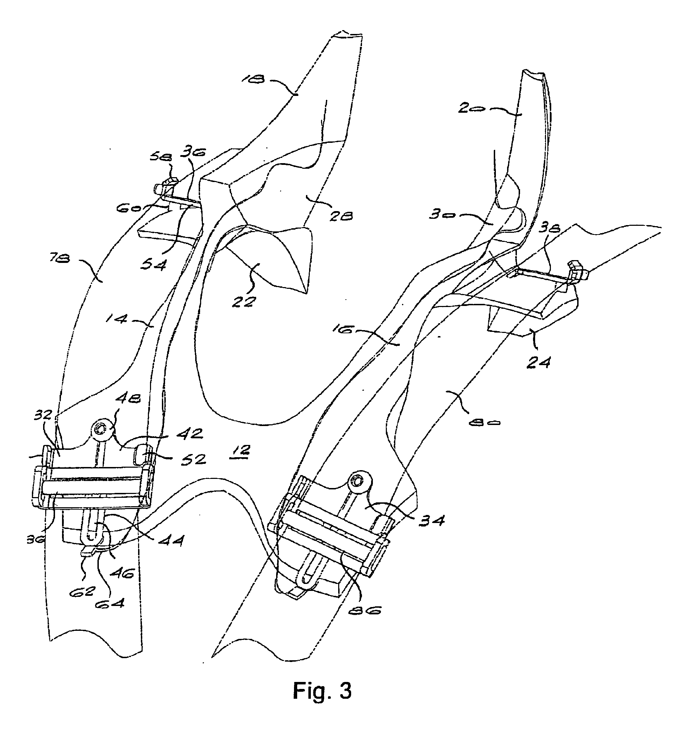

Referring now specifically to Figures 3 and 4, the interaction between the apparatus of the invention and a safety harness worn by the user of the apparatus is shown.

The user wears a four-, five- or six-point harness including a pair of straps 78 and 80, which pass over the shoulders of the user to respective anchorages 82 in the vehicle at the upper end of the backrest 84 of a seat occupied by the user. Such a harness always has shoulder portions and lap portions and, in five- and six-point harnesses, also has one or two crotch portions. Thus, a four-point harness will comprise left and right shoulder portions and left and right lap portions making up the four points, with five- and six-point harnesses having one or two additional crotch portions, respectively.

Conventionally, such harnesses have adjustable buckles which allow the straps 78 and 80 to be adjusted snugly over the user's shoulders. In the illustrated prototype apparatus of the invention, these buckles 86 are received by the guides 32 and 34, with the straps 78 and 80 being located and retained by the inwardly curved outer ends of the arms of the guides. The upper edge of the buckle abuts the ends of the arms, preventing the buckle from moving longitudinally past the guide. The straps also pass through the guides 36 and 48 as shown in Figure 4, being retained in position on the guides by the curved outer ends thereof.

Instead of providing guides that engage existing buckles on the harness straps, it is also possible to provide strap engaging means in the form of clamps or gripping members which are fastened to the strap at a desired location. The rollers are arranged to wind the tether cords around a reel or shaft when an impact causes the harness straps to move relative to the yoke and rotate the rollers. In such an embodiment, the harness strap will slide over the roller and the friction between the roller and harness strap will cause the roller to rotate and so wind the cord onto it, tensioning the cord.

In another embodiment, rollers can be mounted on the upper guides 36 and 38 in an integrated system in which the rollers react to longitudinal movement of the harness and lateral sliding of the guides takes place in response to lateral movement of the harness.

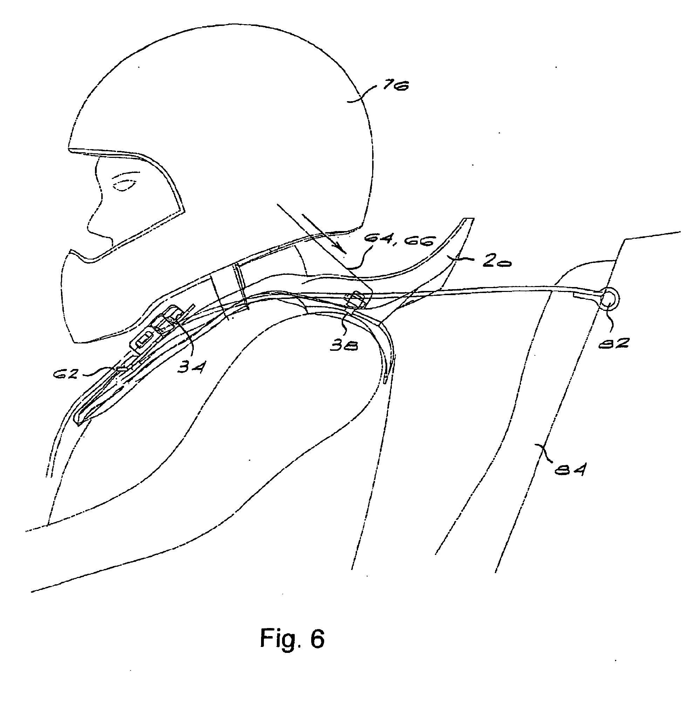

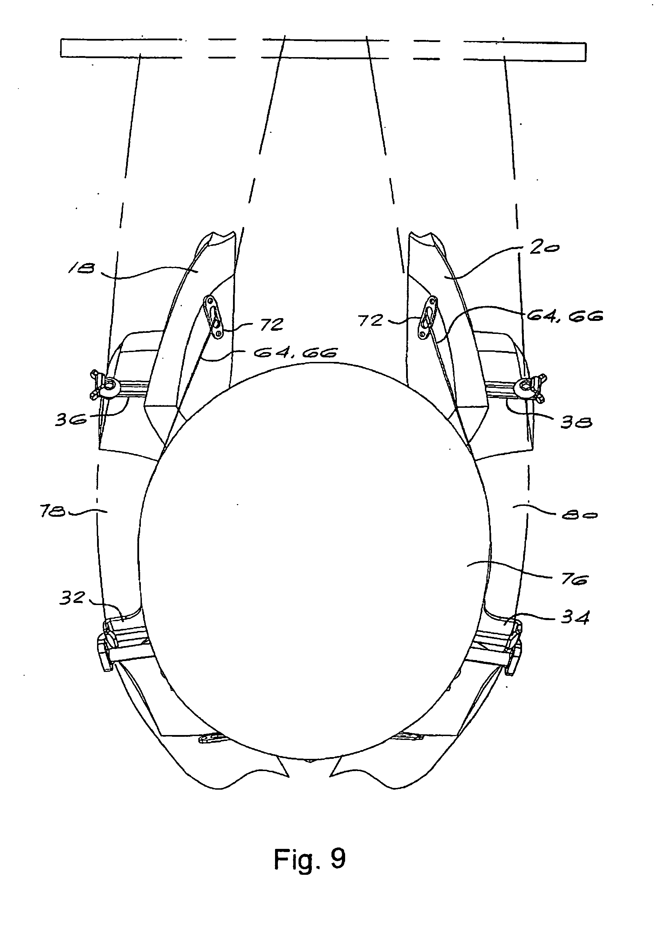

In the event of an impact, the torso of the user moves relative to the harness straps, typically by as much as 100mm. The movement of the user relative to the harness in the case of a frontal impact is shown in Figures 6 and 9. The user's torso is displaced relative to the straps themselves, and consequently relative to the position of the harness buckles or other strap engaging means. The yoke 10 moves forward with the user's torso in this scenario, causing the strap buckles to slide upwardly, together with the respective guides 32 and 34, relative to the yoke. This pulls the cords 64 tight, exerting a pre-tensioning force in the direction of the arrow in Figure 6. This force maintains the correct orientation of the helmet 76 and prevents the user's head from extending forwards.

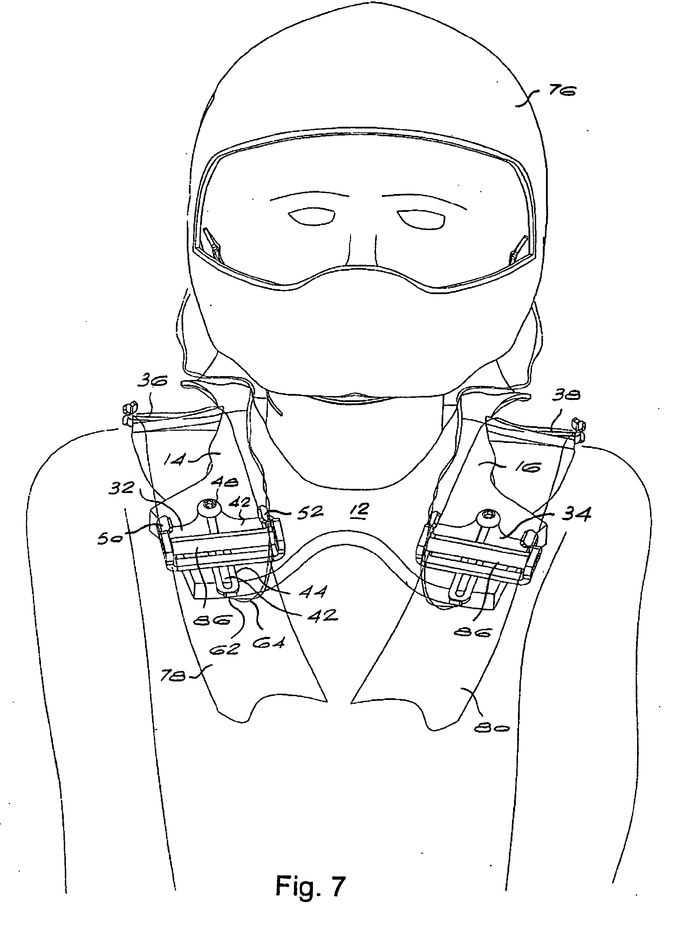

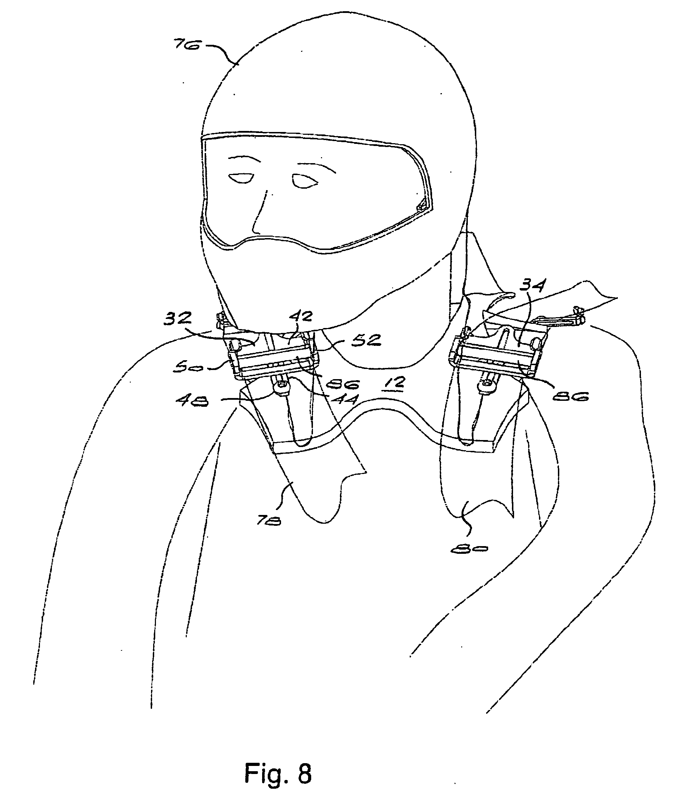

As best indicated in Figures 7 and 8, when a lateral impact occurs, the user's torso is displaced laterally relative to the initial position of the harness straps, causing an outward displacement of one or the other of the guides 36 or 38 and tensioning the respective cord 66, thus exerting a corrective pre-tensioning force on the user's helmet and maintaining the correct alignment of the user's head and neck.

## Claims

1. Head and neck restraint apparatus for an occupant of a vehicle, the apparatus comprising:
a stiff yoke (10) shaped to engage the upper torso and shoulders of the occupant, the yoke (10) having a frontal portion (12) shaped to extend over the chest of the occupant, an intermediate portion (14,16) shaped to fit over the shoulders of the occupant, and an upper, helmet (76) engaging portion (18,20) extending beyond the intermediate portion (14,16) and shaped to constrain movement of a helmet (76) worn by the occupant;
a plurality of first guide means (32,34) associated with the yoke (10) and arranged to engage harness members of a safety harness worn by the occupant; and
a plurality of tensioning members (64) .connectable between the respective guide means (32,34) and the helmet (76),
**characterised in that** each guide means (32,34) is shaped to engage a respective harness member and is responsive to longitudinal movement of said harness member relative to said guide means (32,34) so that movement of the occupant causing displacement of the harness relative to the yoke (10) results in a tensioning force being applied to the helmet (76) by at least one tensioning member (64).

2. Apparatus according to claim 1 wherein the yoke (10) is generally U- shaped, with a base and upwardly extending limbs (14,16), the base of the U corresponding to the frontal portion (12) of the yoke (10) and the upper ends of the limbs corresponding to the helmet (76) engaging portion (18,20) thereof.

3. Apparatus according to claim 1 or claim 2 including a pair of first guide means (32,34) mounted on the frontal portion (12) of the yoke (10), each guide means (32,34) being arranged to receive a respective strap (78,80) of a safety harness worn by the occupant.

4. Apparatus according to any one of claims 1 to 3 wherein each first guide means (32,34) is shaped to engage a buckle (18) or other formation on the strap (78,80) so that longitudinal movement of the strap (78,80) relative to the first guide means (32,34), at least in one direction, is prevented.

5. Apparatus according to any one of claims 1 to 4 wherein each first guide means (32,34) is mounted slidably relative to the yoke (10) so that an acceleration causing movement of the occupant and the yoke (10) relative to the harness causes sliding displacement of the first guide means (32,34) relative to the yoke (10).

6. Apparatus according to any one of claims 1 to 5 wherein the tensioning members (64) are flexible cords fixed to the first guide means (32,34) at one end thereof and connectable to respective fixing points on the helmet (76) in use.

7. Apparatus according to any one of claims 1 to 6 wherein the yoke (10) defines a guide (70) for each tensioning member (64) to ensure correct orientation thereof in use.

8. Apparatus according to claim 7 wherein the yoke (10) defines a plurality of conduits (70) extending between a lower edge of the frontal portion (12) of the yoke (10), adjacent the first guide means (32,34), and respective inner surfaces (28,30) of the helmet (76) engaging portion (18,20) of the yoke (10).

9. Apparatus according to any one of claims 1 to 8 including a plurality of second guide means (36,38) mounted on the intermediate portion (14,16) of the yoke (10) and arranged to engage respective harness members passing over the shoulders of the occupant in use, the second guide means (36,38) being responsive to lateral movement of the harness members due to movement of the occupant causing displacement of the harness relative to the yoke (10), with a plurality of tension members (66) each connectable between a second guide means (36,38) and the helmet (76).

10. Apparatus according to claim 9 wherein each second guide means (36,38) is mounted slidably relative to the yoke (10) so that an acceleration causing lateral movement of the occupant and the yoke (10) relative to the harness causes sliding displacement of the second guide means (36,38) relative to the yoke (10).

## Patentansprüche

1. Kopf- und Nackenstützvorrichtung für einen Insassen eines Fahrzeugs, wobei die Vorrichtung umfasst:
einen steifen Bügel (10), der so geformt ist, dass er mit dem oberen Rumpf und den Schultern des Insassen in Eingriff kommt, wobei der Bügel (10) über einen vorderen Teil (12) verfügt, der so geformt ist, dass er sich über die Brust des Insassen erstreckt, über einen mittleren Teil (14, 16), der so geformt ist, dass er sich über die Schultern des Insassen erstreckt, und über einen oberen, mit dem Helm (76) in Eingriff kommenden Teil (18, 20), der sich über den mittleren Bereich (14, 16) hinaus erstreckt und so geformt ist, dass er eine Bewegung eines vom Insassen getragenen Helms (76) einschränkt;
mehrere erste Führungsmittel (32, 34), die zum Bügel (10) gehören und so angeordnet sind, dass sie mit Gurtelementen eines Sicherheitsgurts in Eingriff kommen, der vom Insassen getragen wird; und
mehrere Spannelemente (64), die zwischen den jeweiligen Führungsmitteln (32, 34) und dem Helm (76) angebracht werden können,
**dadurch gekennzeichnet, dass** jedes Führungsmittel (32, 34) so geformt ist, dass es mit dem jeweiligen Gurtelement in Eingriff kommt, und auf eine Längsbewegung des Gurtelements im Verhältnis zum Führungsmittel (32, 34) so reagiert, dass eine Bewegung des Insassen, die eine Verschiebung des Gurts im Verhältnis zum Bügel (10) verursacht, zur Anwendung einer Spannkraft auf den Helm (76) durch mindestens ein Spannelement (64) führt.

2. Vorrichtung gemäß Anspruch 1, wobei der Bügel (10) im Großen und Ganzen U-förmig ist, mit einem Unterteil und sich nach oben erstreckenden Schenkeln (14, 16), wobei das Unterteil des Us dem vorderen Teil (12) des Bügels (10) entspricht und die oberen Enden der Schenkel dem Teil (18, 20) davon entsprechen, der mit dem Helm (76) in Eingriff kommt.

3. Vorrichtung gemäß Anspruch 1 oder Anspruch 2 mit einem Paar erster Führungsmittel (32, 34), welche am vorderen Teil (12) des Bügels (10) angebracht sind, wobei jedes Führungsmittel (32, 34) so angeordnet ist, dass es einen entsprechenden Riemen (78, 80) eines Sicherheitsgurts aufnehmen kann, der vom Insassen getragen wird.

4. Vorrichtung gemäß einem der Ansprüche 1 bis 3, wobei jedes erste Führungsmittel (32, 34) so geformt ist, dass es mit einer Schnalle (18) oder einem anderen Gebilde auf dem Riemen (78, 80) in Eingriff kommt, sodass eine Längsbewegung des Riemens (78, 80) im Verhältnis zum ersten Führungsmittel (32, 34) zumindest in einer Richtung verhindert wird.

5. Vorrichtung gemäß einem der Ansprüche 1 bis 4, wobei jedes erste Führungsmittel (32, 34) im Verhältnis zum Bügel (10) verschiebbar angebracht ist, sodass eine Beschleunigung, die eine Bewegung des Insassen und des Bügels (10) im Verhältnis zum Gurt verursacht, ein gleitendes Verschieben des ersten Führungsmittels (32, 34) im Verhältnis zum Bügel (10) verursacht.

6. Vorrichtung gemäß einem der Ansprüche 1 bis 5, wobei die Spannelemente (64) flexible Schnüre sind, die an einem Ende davon an den ersten Führungsmitteln (32, 34) befestigt sind und beim Einsatz mit den jeweiligen Befestigungspunkten am Helm (76) verbunden werden können.

7. Vorrichtung gemäß einem der Ansprüche 1 bis 6, wobei der Bügel (10) eine Führung (70) für jedes Spannelement (64) definiert, um dessen richtige Ausrichtung beim Einsatz zu gewährleisten.

8. Vorrichtung gemäß Anspruch 7, wobei der Bügel (10) mehrere Kanäle (70) definiert, die sich zwischen einem unteren Rand des vorderen Teils (12) des Bügels (10), neben den ersten Führungsmitteln (32, 34), und entsprechenden Innenflächen (28, 30) des Teils (18, 20) des Bügels (10), der mit dem Helm (76) in Eingriff kommt, erstrecken.

9. Vorrichtung gemäß einem der Ansprüche 1 bis 8 mit mehreren zweiten Führungsmitteln (36, 38), die am mittleren Teil (14, 16) des Bügels (10) angebracht und so angeordnet sind, dass sie mit den jeweiligen Gurtelementen in Eingriff kommen, die beim Einsatz über die Schultern des Insassen führen, wobei die zweiten Führungsmittel (36, 38) auf eine seitliche Bewegung der Gurtelemente aufgrund einer Bewegung des Insassen reagieren und eine Verschiebung des Gurts im Verhältnis zum Bügel (10) verursachen, wobei mehrere Spannelemente (66) jeweils zwischen einem zweiten Führungsmittel (36, 38) und dem Helm (76) angebracht werden können.

10. Vorrichtung gemäß Anspruch 9, wobei jedes zweite Führungsmittel (36, 38) im Verhältnis zum Bügel (10) verschiebbar angebracht ist, sodass eine Beschleunigung, die eine seitliche Bewegung des Insassen und des Bügels (10) im Verhältnis zum Gurt verursacht, ein gleitendes Verschieben des zweiten Führungsmittels (36, 38) im Verhältnis zum Bügel (10) verursacht.

## Revendications

1. Appareil de retenue de la tête et du cou pour un occupant d'un véhicule, l'appareil comprenant :
un étrier rigide (10) façonné pour se mettre en contact avec le torse supérieur et les épaules de l'occupant, l'étrier (10) possédant une partie frontale (12) façonnée pour se prolonger au-dessus de la poitrine de l'occupant, une partie intermédiaire (14, 16) façonnée pour s'adapter au-dessus des épaules de l'occupant, et une partie supérieure (18, 20) se solidarisant avec le casque (76) laquelle se prolonge au-delà de la partie intermédiaire (14, 16) et façonnée pour limiter le mouvement d'un casque (76) porté par l' occupant ;
une pluralité de premiers moyens de guidage (32, 34) associés à l'étrier (10) et agencés pour se mettre en contact avec des éléments de harnais d'un harnais de sécurité porté par l'occupant ; et
une pluralité d'éléments tendeurs (64) raccordables entre les moyens de guidage respectifs (32, 34) et le casque (76),
**caractérisé en ce que** chaque moyen de guidage (32, 34) est façonné pour se mettre en contact avec un élément de harnais respectif et est sensible à un mouvement longitudinal dudit élément de harnais par rapport auxdits moyens de guidage (32, 34) de sorte que le mouvement de l'occupant provoquant un déplacement du harnais par rapport à l'étrier (10) aboutit au fait qu'au moins un élément de tension (64) exerce une force de tension sur le casque (76).

2. Appareil selon la revendication 1, l'étrier (10) ayant une forme en U de manière générale, avec une base et des membres se prolongeant vers le haut (14, 16), la base de l'U correspondant à la partie frontale (12) de l'étrier (10), alors que les extrémités supérieures des membres correspondent à la partie (18, 20) se solidarisant avec le casque (76) de celui-ci.

3. Appareil selon la revendication 1 ou la revendication 2, comportant une paire de premiers moyens de guidage (32, 34) montés sur la partie frontale (12) de l'étrier (10), chaque moyen de guidage (32, 34) étant agencé pour recevoir une sangle respective (78, 80) d'un harnais de sécurité porté par l'occupant.

4. Appareil selon l'une quelconque des revendications 1 à 3, chacun des premiers moyens de guidage (32, 34) étant façonné pour se solidariser avec une boucle (18) ou une autre formation prévue sur la sangle (78, 80) de sorte à empêcher, au moins dans un sens, tout mouvement longitudinal de la sangle (78, 80) par rapport aux premiers moyens de guidage (32, 34).

5. Appareil selon l'une quelconque des revendications 1 à 4, chacun des premiers moyens de guidage (32, 34) étant monté de façon coulissante par rapport à l'étrier (10) de sorte qu'une accélération laquelle provoque un mouvement de l'occupant et de l'étrier (10) par rapport au harnais va se traduire par un déplacement coulissant des premiers moyens de guidage (32, 34) par rapport à l'étrier (10).

6. Appareil selon l'une quelconque des revendications 1 à 5, les éléments tendeurs (64) étant des cordes flexibles lesquelles sont fixées aux premiers moyens de guidage (32, 34) au niveau d'une extrémité de ceux-ci, et raccordables à des points de fixation respectifs prévus sur le casque (76) lors de l'utilisation.

7. Appareil selon l'une quelconque des revendications 1 à 6, l'étrier (10) définissant un guide (70) pour chaque élément tendeur (64) pour veiller à avoir une orientation correcte de celui-ci lors de l'utilisation.

8. Appareil selon la revendication 7, l'étrier (10) définissant une pluralité de conduits (70) lesquels se prolongent entre un bord inférieur de la partie frontale (12) de l'étrier (10), en position adjacente aux premiers moyens de guidage (32, 34), et des surfaces internes respectives (28, 30) de la partie (18, 20) se solidarisant avec le casque (76) de l'étrier (10).

9. Appareil selon l'une quelconque des revendications 1 à 8, englobant une pluralité de seconds moyens de guidage (36, 38) montés sur la partie intermédiaire (14, 16) de l'étrier (10) et agencés pour se solidariser avec des éléments de harnais respectifs passant au-dessus des épaules de l'occupant lors de l'utilisation, les seconds moyens de guidage (36, 38) étant sensibles à un mouvement latéral des éléments de harnais en raison d'un mouvement de l'occupant qui provoque un déplacement du harnais par rapport à l'étrier (10), avec une pluralité d'éléments tendeurs (66) chacun étant raccordable entre un second moyen de guidage (36, 38) et le casque (76).

10. Appareil selon la revendication 9, chacun des seconds moyens de guidage (36, 38) étant monté de façon coulissante par rapport à l'étrier (10) de sorte qu'une accélération laquelle provoque un mouvement latéral de l'occupant et de l'étrier (10) par rapport au harnais va se traduire par un déplacement coulissant des seconds moyens de guidage (36, 38) par rapport à l'étrier (10).
